# FASCICULE DE BREVET EUROPEEN

(11) **EP 4 360 851 B1**
(45) Date de publication et mention de la délivrance du brevet: **13.08.2025**
(21) Numéro de dépôt: 23203960.2
(22) Date de dépôt: 17.10.2023
(51) Int. Cl.: B29C 45/33, B62K 19/16, B29C 45/26, B29L 22/00, B29L 23/00, B29L 31/30

(54) **MOULE POUR LA FABRICATION D'UN CADRE DE BICYCLETTE ET PROCEDE DE FABRICATION D'UN TEL CADRE PAR INJECTION METTANT EN UVRE LEDIT MOULE**
FORM ZUR HERSTELLUNG EINES FAHRRADRAHMENS UND VERFAHREN ZUR HERSTELLUNG EINES SOLCHEN RAHMENS DURCH SPRITZGIESSEN UNTER VERWENDUNG DIESER FORM
MOULD FOR MANUFACTURING A BICYCLE FRAME AND METHOD FOR MANUFACTURING SUCH A FRAME BY INJECTION USING SAID MOULD

(30) Priorité: 31.10.2022 FR 2211368
(43) Date de publication de la demande: 01.05.2024
(73) Titulaire: Ultima Mobility, 69800 SAINT-PRIEST (FR)
(72) Inventeur: EPAILLY, Brice, 66130 Ille-sur-Têt (FR)
(74) Mandataire: Ipsilon Lyon

(56) Documents cités:
- EP-B1- 0 640 457
- US-A1- 2012 217 722

## Description

### Domaine technique de l'invention

La présente invention se rapporte à un moule pour la fabrication d'un cadre de bicyclette (ou vélo), de tricycle, de quadricycle, ou de motocycle par injection d'un matériau polymère dans ledit moule.

L'invention concerne également un procédé de fabrication d'un cadre de bicyclette, de tricycle, de quadricycle, ou de motocycle par injection d'un matériau polymère dans un tel moule.

### Arrière-plan technologique

Dans le domaine de la fabrication des cadres de bicyclette, les principales contraintes des industriels sont d' obtenir un cadre léger tout en limitant les coûts et le temps de production.

Certains cadres sont fabriqués par soudure ou collage de tubes ou de profilés en aluminium ou en acier. Ce type de fabrication offre l'avantage d'être simple et peu coûteux à mettre en œuvre, mais la qualité du cadre obtenu est tout juste moyenne, et convient donc uniquement pour des vélos d'entrée de gamme.

Une autre technique de fabrication se base sur le drapage composite de carbone avec un durcissement sous vide d'une résine époxy. L'opération de drapage consiste à découper des plis de matière première, appelés pré-imprégnés, et de les draper manuellement dans un moule qui apportera la forme de la pièce. Des vessies en silicone peuvent être utilisées pour la réalisation de pièces composites présentant des formes complexes, notamment pour la réalisation de corps creux.

Cette seconde technique de fabrication conduit à des cadres hauts de gamme et légers, mais très chers du fait des coûts de production (notamment la main d'œuvre) élevés. Par ailleurs, l'intervalle de tolérance lors du gonflage des vessies conduit généralement à des disparités dans la structure du cadre, et tout particulièrement à des variations d'épaisseur au sein du même cadre mais également d'un cadre à l'autre, ce qui pose des problèmes de précision et de répétabilité.

Une troisième technique consiste à réaliser le cadre par fabrication puis assemblage de demi- parties de cadre. Toutefois, cette technique nécessite une liaison entre les demi-parties, cette liaison étant susceptible de manquer de robustesse, d'étanchéité et/ou de tenue géométrique et dimensionnelle dans le temps. Le document US 2012217722 décrit un moule et un procédé mettant en œuvre un tel moule, pour la fabrication d'un cadre de vélo monobloc, par injection d'un matériau polymère obtenu à partir de bouteilles de polytéréphtalate d'éthylène recyclées. En plus de l'aspect écologique, ce procédé permet de réduire les risques de vieillissement du cadre liés à la corrosion des aciers, et de s'affranchir des opérations de traitement anti-corrosion qui sont coûteuses et polluantes. Le cadre obtenu par ce procédé est toutefois relativement lourd, et ne convient donc pas à certaines applications.

Un autre procédé connu consiste à mettre en œuvre un moule pour la fabrication d'un cadre monobloc par injection d'un matériau polymère dont les corps creux sont obtenus de façon hybride entre tiroirs et une mise en forme hydraulique (appelé injection d'eau) de matière non durcie.

Malgré les avantages indéniables des procédés existant, ceux-ci ne donnent pas entière satisfaction, notamment en ce qui concerne les aspects combinés de légèreté du cadre obtenu, de précision de la structure du cadre, et de répétabilité du procédé.

### Brève description de l'invention

Un but de l'invention est de proposer un moule pour la fabrication d'un cadre de bicyclette (ou vélo), de tricycle, de quadricycle, ou de motocycle permettant d'automatiser le moulage du cadre tout en maitrisant l'épaisseur de matière autour des corps creux constitutifs des parties du cadre, par exemple la fourche, le tube diagonal, les bases, les haubans, ou encore la tige de selle.

L'invention vise également à assurer une bonne répétabilité du procédé, c'est-à-dire l'obtention de cadres successifs substantiellement identiques au fur et à mesure des opérations de moulage, qui présentent tous une épaisseur de matière maitrisée et similaire au niveau des différentes parties du cadre, et ce avec un temps de procédé contenu, de l'ordre de quelques minutes, par exemple environ 5 minutes.

L'invention vise également à fournir un tel moule, conduisant à un cadre léger.

A cette fin, l'invention propose un moule pour la fabrication d'un cadre monobloc de bicyclette, de tricycle, de quadricycle, ou de motocycle par injection d'un matériau polymère, le moule comprenant une partie fixe et une partie mobile apte à se rapprocher ou à s'éloigner de la partie fixe pour fermer ou ouvrir le moule respectivement, qui délimitent ensemble une empreinte de moulage du cadre lorsque le moule est fermé. Le moule comprend :
- au moins trois coulisseaux, aptes à être insérés dans des empreintes respectives de l'empreinte de moulage dont le positionnement au sein de l'empreinte de moulage et le profil correspondent à des parties du cadre à fabriquer, lesdits coulisseaux étant destinés à être surmoulés de matériau polymère pendant une opération de moulage de sorte à former lesdites parties du cadre,
- au moins deux de ces coulisseaux sont en engagement l'un avec l'autre lorsqu'ils sont en position dans leur empreinte respective, formant ainsi une structure solide capable de résister aux efforts d'injection.

Le moule est caractérisé en ce qu'il comprend au moins trois des empreintes et coulisseaux correspondants suivants :
- une première empreinte présentant un profil de pivot de fourche du cadre, et un premier coulisseau adapté pour être inséré dans la première empreinte,
- une deuxième empreinte qui communique avec la première empreinte, présentant un profil de tube diagonal du cadre, et un deuxième coulisseau adapté pour être inséré dans la deuxième empreinte,
- une troisième empreinte qui communique avec la deuxième empreinte, présentant un profil de bases et de haubans, et un troisième coulisseau adapté pour être inséré dans la troisième empreinte,
- une quatrième empreinte qui communique avec la troisième empreinte, présentant un profil de tige de selle, et un quatrième coulisseau adapté pour être inséré dans la quatrième empreinte.

Lors du moulage, le matériau polymère, qui comprend avantageusement un polymère thermoplastique, est injecté dans l'empreinte de moulage, et recouvre la surface externe des coulisseaux alors en position dans leur empreinte respective de l'empreinte de moulage (coulisseaux dits « fermés »).

De ce fait, les coulisseaux jouent eux-mêmes le rôle de moules pour les différentes parties creuses du cadre qui est formé. En adaptant avec précision le profil et l'emplacement des coulisseaux dans l'empreinte de moulage, il est possible d'ajuster en conséquence les caractères structurels et dimensionnels du cadre. Le profil externe des parties creuses du cadre est également fonction du profil des empreintes de l'empreinte de moulage.

Par ailleurs, les coulisseaux sont en engagement mécanique les uns avec les autres, c'est-à-dire qu'ils viennent en contact serré les uns contre les autres, et sont maintenus en position. Au moins deux de ces coulisseaux, de préférence au moins trois, plus préférablement au moins quatre, et encore plus préférablement tous les coulisseaux, ou tous les coulisseaux sauf un, sont en engagement les uns avec les autres. De préférence, les coulisseaux s'assemblent, ou plus précisément s'imbriquent les uns dans les autres, par insertion d'une partie saillante d'un coulisseau dans un logement de forme complémentaire d'un coulisseau voisin. Un coulisseau déterminé peut comprendre une partie saillante venant se loger dans un logement de forme complémentaire d'un autre coulisseau, ou il peut comprendre un logement recevant une partie saillante de forme complémentaire d'un autre coulisseau, ou bien les deux à la fois, selon son positionnement par rapport aux autres coulisseaux et l'évolution de la pression au sein de l'empreinte de moulage pendant l'opération de moulage.

Une conséquence de cet assemblage spécifique est que les coulisseaux sont interconnectés les uns aux autres, de manière mécanique, ce qui forme une structure solide capable de résister aux efforts d'injection exercés par le matériau polymère lors de son injection dans l'empreinte de moulage. Ainsi, les coulisseaux restent immobiles en position dans leur empreinte respective au sein de l'empreinte de moulage pendant toute la durée de l'injection, ce qui garantit une régularité dans l'épaisseur de la couche de matériau polymère surmoulé sur les coulisseaux, c'est-à-dire l'épaisseurs des corps creux constitutifs de la structure du cadre obtenu en fin de procédé.

On obtient ainsi un cadre aux épaisseurs et tolérances maitrisées, non seulement pour le premier cadre, mais également pour tous les cadres fabriqués par la suite dans ce moule, ce qui traduit une excellente répétabilité.

De plus, les efforts mécaniques appliqués sur les coulisseaux dépendent du flux de matériau polymère pendant le remplissage. En pratique, ce flux est déséquilibré et il est difficile de positionner les lignes de soudure aux endroits les plus avantageux, c'est-à-dire les plus résistants mécaniquement. La structure solide formées par les coulisseaux maintenus en position dans leur empreinte de moulage permet d'avoir cette liberté de positionnement des lignes de soudure.

Cette structure spécifique permet également de prévoir des coulisseaux plus élancés par rapport à d'autres moules de fabrication de cadres de l'état de l'art. En conséquence, la taille du moule est réduite, et celle de la presse l'est également, d'où une diminution des coûts de production (diminution des coûts d'amortissement de l'investissement presse).

Le cadre est formé d'un ensemble de parties creuses ou corps creux en matériau polymère, ce qui le rend léger et résistant, le tout avec un volume de matière contenu, le rendant ainsi économiquement intéressant.

Ce cadre est « monobloc » en ce que les parties creuses forment un unique ensemble creux (le cadre complet) en matériau polymère.

La fabrication d'un cadre monobloc permet de s'affranchir des demi-parties de cadre assemblées avec des faiblesses récurrentes des assemblages, telles que le manque de robustesse, d'étanchéité et/ou de tenue géométrique et dimensionnelle dans le temps. Par nature (taille humaine). Ce type de fabrication conduit également à une réduction des assemblages de composants de cadre (automatisation), ce qui permet d'automatiser le procéder afin d'améliorer les cadences et de réduire les coûts de production.

Selon d'autres aspects, le moule selon l'invention présente les différentes caractéristiques suivantes prises seules ou selon leurs combinaisons techniquement possibles :
- au moins deux des coulisseaux sont munis d'au moins un logement adapté pour recevoir une portion saillante de forme complémentaire d'un coulisseau voisin, de sorte que lorsque les coulisseaux sont en position dans leur empreinte respective, lesdits coulisseaux sont emboités les uns dans les autres. Cet emboîtement ou enchâssement conduit à une liaison plus forte des coulisseaux entre eux, ce qui assure une solidité accrue de la structure ;
- le moule comprend au moins trois des empreintes et coulisseaux correspondants suivants :
   - une première empreinte présentant un profil de pivot de fourche du cadre, et un premier coulisseau adapté pour être inséré dans la première empreinte,
      - une deuxième empreinte qui communique avec la première empreinte, présentant un profil de tube diagonal du cadre, et un deuxième coulisseau adapté pour être inséré dans la deuxième empreinte,
      - une troisième empreinte qui communique avec la deuxième empreinte, présentant un profil de bases et de haubans, et un troisième coulisseau adapté pour être inséré dans la troisième empreinte,
      - une quatrième empreinte qui communique avec la troisième empreinte, présentant un profil de tige de selle, et un quatrième coulisseau adapté pour être inséré dans la quatrième empreinte ;
   - au moins deux des coulisseaux suivants sont munis d'au moins un logement tel que :
      - le premier coulisseau est muni d'au moins un logement adapté pour recevoir une portion saillante du deuxième coulisseau,
      - le deuxième coulisseau est muni d'au moins un logement adapté pour recevoir une portion saillante du troisième coulisseau,
      - le troisième coulisseau est muni d'au moins un logement adapté pour recevoir une portion saillante du quatrième coulisseau ;
   - en considérant que l'empreinte de moulage est positionnée dans un sens conventionnel d'utilisation d'une bicyclette, d'un tricycle, d'un quadricycle, ou d'un motocycle :
      - le premier coulisseau est inséré par le dessous du moule, dans une direction du pivot de fourche,
      - le deuxième coulisseau est inséré par le dessous du moule, dans une direction du tube diagonal, et vient s'emboîter dans le premier coulisseau,
      - le troisième coulisseau est inséré par l'arrière du moule, et vient s'emboîter dans le deuxième coulisseau,
      - le quatrième coulisseau est inséré par le dessus du moule, dans une direction de la tige de selle, et vient s'emboîter dans le troisième coulisseau.
   - le moule comprend au moins un des points d'injection suivants :
      - au moins un point d'injection situé sur le pivot de fourche, de préférence au moins deux points d'injection situés préférentiellement aux deux extrémités du pivot de fourche,
      - au moins un point d'injection situé sur le tube diagonal,
      - au moins un point d'injection situé sur la tige de selle,
      - au moins deux points d'injection situés sur une portion avant de chaque base, c'est-à-dire proche du pédalier,
      - au moins deux points d'injection situés sur une portion arrière de chaque base, c'est-à-dire au niveau de la jointure des bases et des haubans.

L'invention concerne également un procédé de fabrication d'un cadre de vélo, de tricycle, ou de quadricycle par injection d'un matériau polymère dans un moule tel que décrit précédemment.

Ce procédé comprend les étapes suivantes :
- fourniture d'un moule tel que décrit précédemment,
- fermeture des coulisseaux afin de les mettre en engagement les uns avec les autres, de préférence de les emboîter les uns dans les autres, et fermeture du moule par déplacement de la partie mobile vers la partie fixe jusqu'au contact de celles-ci de sorte à délimiter l'empreinte de moulage,
- injection à chaud d'un matériau polymère dans l'empreinte de moulage, en surmoulant les coulisseaux en position dans leur empreinte respective, pour former le cadre,
- ouverture des coulisseaux, et ouverture du moule par séparation des parties fixe et mobile pour libérer le cadre,
- éjection du cadre.

Selon d'autres aspects, le procédé selon l'invention présente les différentes caractéristiques suivantes prises seules ou selon leurs combinaisons techniquement possibles :
- le procédé comprend en outre une étape de nervurage extérieur des bases du cadre ;
- le procédé comprend en outre une étape de nervurage intérieur des haubans du cadre ;
- le matériau polymère est injecté dans l'empreinte de moulage par des points d'injection, l'injection étant réalisée depuis l'avant du cadre, c'est-à-dire un point d'injection débouchant sur une empreinte du pivot de fourche ou une empreinte du tube diagonal, vers l'arrière du cadre, c'est-à-dire un point d'injection débouchant sur une empreinte des bases et des haubans ou une empreinte de la tige de selle ;
- le matériau polymère est un matériau composite comprenant une matrice polymère et un renfort fibreux, ledit renfort fibreux ayant une teneur comprise entre 30% et 60% en poids par rapport au poids total du matériau composite. De préférence, la matrice polymère est une matrice polymère thermoplastique comprenant au moins un polymère thermoplastique ;
- le polymère constitutif de la matrice polymère est choisi parmi : polyacrylamide 6, polyacrylamide 12, polyacrylamide 6/66, polyacrylamide 610, polyacrylamide 66, polyacrylamide 66/6, polyaryléthercétone, de préférence les polyétheréthercétones et polyéthercétonecétones, polytéréphtalate de butylène, polyéthylèneimine, polytéréphtalate d'éthylène, polytéréphtalate d'éthylène glycolisé, polycarbonate, polyméthylpentène, polyoxyméthylène, polyphényléther, polytétrafluoroéthylène, polyfluorure de vinylidène ;
- les fibres constitutives du renfort sont choisies parmi : carbone, lin, chanvre, jute, basalte, acrylique aramide, fibre de verre, fer, coco, aluminium, titane, tungstène, cuivre, magnésium, sisal.

### Description des figures

D'autres avantages et caractéristiques de l'invention apparaîtront à la lecture de la description suivante donnée à titre d'exemple illustratif et non limitatif, en référence aux figures annexées suivantes :
[Fig. 1] La Figure 1 est une vue en perspective du moule selon l'invention, en configuration ouverte, les coulisseaux étant tous ouverts ;
[Fig. 2] La Figure 2 est une vue en perspective du moule de la figure 1, dans lequel le premier coulisseau est fermé, en position dans une empreinte du pivot de fourche ;
[Fig. 3] La Figure 3 est une vue en perspective du moule de la figure 2, dans lequel le deuxième coulisseau est fermé, en position dans une empreinte du tube diagonal, et en engagement avec le premier coulisseau ;
[Fig. 4] La Figure 4 est une vue en perspective du moule de la figure 3, dans lequel le troisième coulisseau est fermé, en position dans une empreinte des bases et des haubans, et en engagement avec le deuxième coulisseau ;
[Fig. 5] La Figure 5 est une vue en perspective du moule de la figure 4, dans lequel le quatrième coulisseau est fermé, en position dans une empreinte de la tige de selle, et en engagement avec le troisième coulisseau, tous les coulisseaux étant ainsi fermés ;
[Fig. 6] La Figure 6 est une vue en perspective du moule de la figure 5, ledit moule étant fermé par contact des partie fixe et mobile ;
[Fig. 7] La Figure 7 est une vue en perspective du moule après fabrication et éjection du cadre ;
[Fig. 8] La Figure 8 est une vue de face et en coupe du moule de la figure 5, qui illustre l'interconnexion des coulisseaux ;
[Fig. 9] La Figure 9 est une représentation du cadre qui illustre le positionnement des points d'injection ;
[Fig. 10] La Figure 10 est une vue en perspective du cadre obtenu par la mise en œuvre du moule selon l'invention.

### Description détaillée de modes de réalisation de l'invention

Le moule selon l'invention est destiné à la fabrication d'un cadre de bicyclette ou également vélo (abréviation de vélocipède), de tricycle, de quadricycle, ou de motocycle. Les termes « bicyclette » ou « vélo », « tricycle », « quadricycle », et motocycle s'apprécient au sens large dans le cadre de l'invention, et couvrent ainsi des véhicules à deux, trois, ou quatre roues mus exclusivement par la force physique de l'utilisateur ou de tels véhicules à assistance électrique, munis d'une batterie, et appelés couramment vélos électriques.

Dans la suite du présent texte, dans un but de simplification, le cadre sera désigné simplement en tant que cadre de vélo, étant entendu que les caractéristiques décrites s'appliquent également à un tricycle, un quadricycle, et un motocycle.

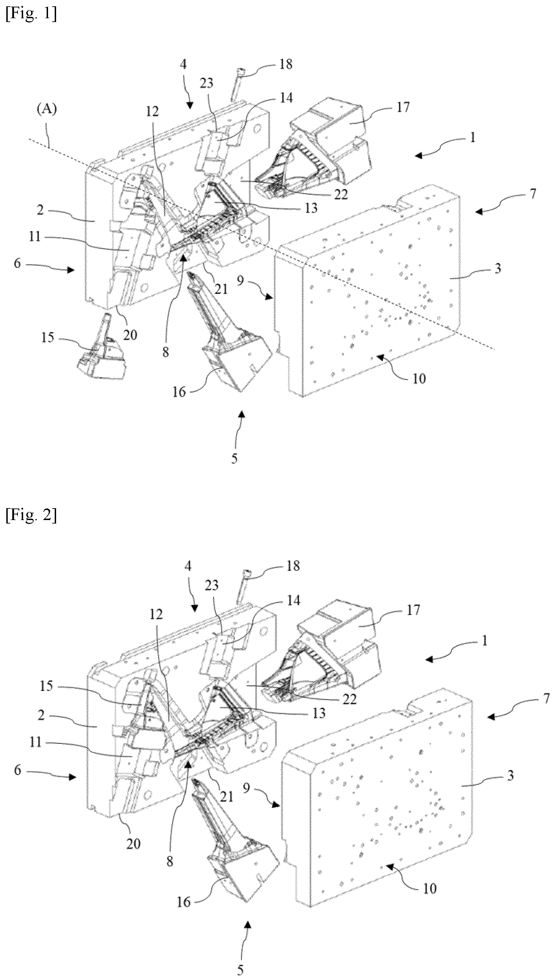

Un mode de réalisation du moule est illustré sur les figures 1 à 8. Sur ces figures, le moule est représenté dans plusieurs configurations différentes en fonction de l'avancement du procédé de moulage.

Le moule 1 est composé de deux parties, à savoir une partie fixe 2 et une partie mobile 3. La partie fixe 2 est fixe par rapport à l'installation de moulage pendant le procédé de moulage. La partie mobile 3 quant à elle est apte à se déplacer le long d'un axe (A) sensiblement perpendiculaire à la partie fixe et à la partie mobile pendant le procédé de moulage, lors des étapes d'ouverture et de fermeture du moule.

Selon le sens conventionnel d'utilisation du moule 1, celui-ci possède une partie supérieure 4 dite dessus, une partie inférieure 5 dite dessous, ainsi qu'une partie avant 6 dite avant et une partie arrière 7 dite arrière. Dans ce sens conventionnel, le cadre 32 obtenu est lui-aussi dans un sens conventionnel d'utilisation, la tige de selle 37 recevant la selle étant en haut et les bases 35 recevant le pédalier étant en bas.

Les parties fixe et mobile 2, 3 du moule délimitent ensemble une empreinte de moulage 8 du cadre lorsque le moule est fermé. Cette empreinte de moulage 8 est destinée à recevoir le matériau polymère injecté à chaud dans le moule. L'empreinte de moulage est creusée dans les parties internes 9 des parties fixe et mobile du moule, par opposition à leur partie externe 10.

L'empreinte de moulage 8 comprend une pluralité d'empreintes 11, 12, 13, 14 en communication (fluidique) les unes par rapport aux autres. Il s'agit de régions creuses dont les formes correspondent sensiblement au profil des parties constitutives du cadre à fabriquer, et sont adaptées pour recevoir des coulisseaux 15, 16, 17, 18 par insertion de ces derniers. En pratique, les dimensions des empreintes sont supérieures à celles des coulisseaux, afin de réserver un espace entre le profil extérieur des coulisseaux et les parois des empreintes pour l'écoulement du matériau polymère dans toute l'empreinte de moulage.

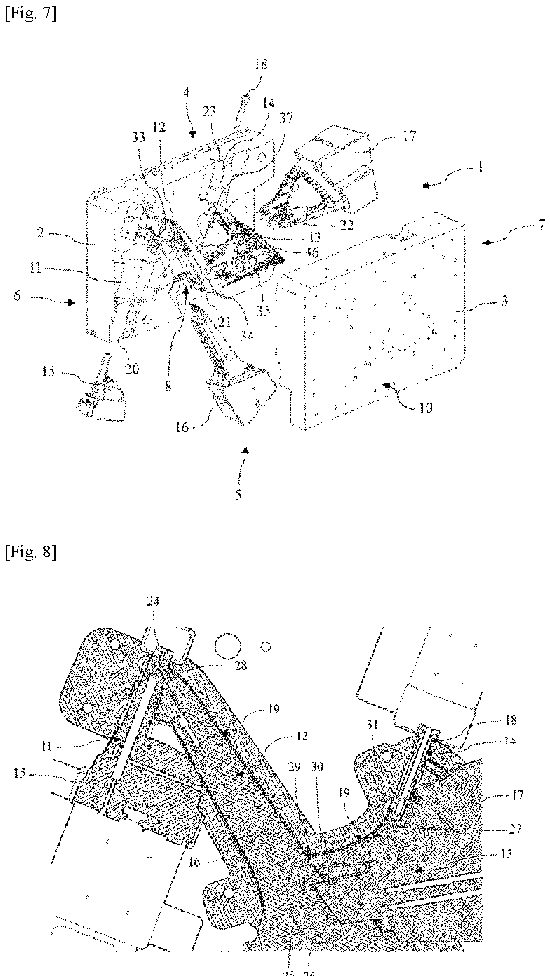

On comprend ainsi que lors de l'injection du matériau polymère dans le moule, celui-ci recouvre les surfaces externes (ou profil externe) des coulisseaux, et se conforme à l'espace 19 situé entre lesdites surfaces externes des coulisseaux et les parois des empreintes, illustré sur la figure 8. Les formes des coulisseaux et des empreintes sont donc choisies de manière à fabriquer des parties respectives du cadre de formes correspondantes.

L'empreinte de moulage 8 comprend une première empreinte 11 qui présente un profil correspondant à celui d'un pivot de fourche 33 du cadre. Elle débouche sur l'extérieur du moule via une ouverture 20 située sur le dessous 5 du moule, et s'étend dans une direction sensiblement rectiligne.

Un premier coulisseau 15 est destiné à être inséré dans la première empreinte 11, depuis l'ouverture 20 du dessous du moule. Ce premier coulisseau 15 présente un profil correspondant à la partie interne ou partie creuse du pivot de fourche 33 du cadre.

L'empreinte de moulage 8 comprend une deuxième empreinte 12 qui présente un profil correspondant à celui d'un tube diagonal 34 du cadre. Elle débouche sur l'extérieur du moule via une ouverture 21 située sur le dessous 5 du moule, et s'étend dans une direction sensiblement rectiligne et inclinée par rapport à la première empreinte 11 d'un angle correspondant à lui entre le pivot de fourche 33 et le tube diagonal 34 du cadre 32 à fabriquer.

Un deuxième coulisseau 16 est destiné à être inséré dans la deuxième empreinte 12, depuis l'ouverture 21 du dessous du moule. Ce deuxième coulisseau 16 présente un profil correspondant à la partie interne ou partie creuse du tube diagonal 34 du cadre.

L'empreinte de moulage 8 comprend une troisième empreinte 13 qui présente un profil correspondant à celui des bases 35 et des haubans 36 du cadre. Elle débouche sur l'extérieur du moule via une ouverture 22 située sur l'arrière 7 du moule, et s'étend dans une direction sensiblement perpendiculaire à la première 11 et à la deuxième empreinte 12.

Un troisième coulisseau 17 est destiné à être inséré dans la troisième empreinte 13, depuis l'ouverture 22 de l'arrière du moule. Ce troisième coulisseau 17 présente un profil correspondant à la partie interne ou partie creuse des bases 35 et des haubans 36 du cadre.

L'empreinte de moulage 8 comprend une quatrième empreinte 14 qui présente un profil correspondant à celui d'une tige de selle 37 du cadre. Elle débouche sur l'extérieur du moule via une ouverture 23 située sur le dessus 4 du moule, et s'étend dans une direction sensiblement parallèle à la première empreinte 11.

Un quatrième coulisseau 18 est destiné à être inséré dans la quatrième empreinte 14, depuis l'ouverture 23 du dessus du moule. Ce quatrième coulisseau 18 présente un profil correspondant à la partie interne ou partie creuse de la tige de selle 37 du cadre.

Lorsque les différents coulisseaux 15, 16, 17 ,18 sont insérés en position dans leur empreinte respective 11, 12, 13, 14, ils délimitent avec les empreintes des espaces 19 pour l'écoulement du matériau polymère, qui s'étendent sur toute l'empreinte de moulage. Lors de son écoulement, le matériau polymère est surmoulé sur les coulisseaux et se conforme d'une part au profil des coulisseaux et d'autre part au profil des empreintes.

Dès lors, les parties du cadre obtenues, notamment le pivot de fourche 33, le tube diagonal 34, les bases 35 et haubans 36, et tige de selle 37, sont creuses. Elles présentent une surface interne dont le profil correspond au profil des coulisseaux, et une surface externe dont le profil correspond au profil des empreintes.

Un aspect principal de l'invention est que les coulisseaux 15, 16, 17, 18 sont interconnectés les uns aux autres.

Plus précisément, au moins un des coulisseaux, de préférence la totalité des coulisseaux 15, 16, 17, 18 ou la totalité des coulisseaux 15, 16, 17, 18 sauf un, sont munis d'au moins un logement 24, 25, 26, 27 adapté pour recevoir une portion saillante 28, 29, 30, 31 de forme complémentaire d'un autre coulisseau. Les coulisseaux sont ainsi assemblés par emboîtement ou encastrement, et forment ensemble une structure solide capable de résister aux efforts d'injection. Cette structure solide ainsi que les logements et parties saillantes des coulisseaux sont représentés plus en détails sur la figure 8.

En effet, lors de l'injection du matériau polymère à chaud, la pression d'injection génère d'importants efforts mécaniques dans l'empreinte de moulage 8, et en particulier sur les coulisseaux 15, 16, 17, 18. Ces efforts peuvent conduire à un mouvement relatif des coulisseaux les uns par rapport aux autres, et ainsi à des irrégularités d'épaisseurs des différentes parties du cadre obtenu, voire à l'éjection des coulisseaux pendant une opération de moulage.

Sur la figure 8, le premier coulisseau 15 est muni à son extrémité côté guidon d'un logement 24 (une encoche) adapté pour recevoir une portion saillante 28 du deuxième coulisseau 16. Le logement 24 s'étend sensiblement dans la direction du deuxième coulisseau 16 et présente une forme complémentaire à celle de la portion saillante 28.

Sur le mode de réalisation de la figure 8, les liaisons entre les coulisseaux sont de type tenon-mortaise. Toutefois, l'invention ne se limite pas à ce type de liaison spécifique, et toute liaison mécanique assurant un maintien optimal des coulisseaux les uns par rapport aux autres par emboitement ou imbrication mécanique en s'opposant aux efforts d'injection peut convenir.

Le deuxième coulisseau 16 est muni à son extrémité côté pédalier de deux logements 25, 26 adaptés pour recevoir deux portions saillantes 29, 30 du troisième coulisseau 17. Le premier logement 25 est une encoche de faibles dimensions qui s'étend dans la direction d'une partie saillante supérieure 29 du troisième coulisseau 17, et qui présente une forme complémentaire à celle de ladite partie saillante supérieure 29. Le deuxième logement 26 est une encoche dont le fond est grand par rapport à ses bords, qui s'étend dans la direction d'une partie saillante inférieure 30 du troisième coulisseau 17, et qui présente une forme complémentaire à celle de ladite partie saillante inférieure 30.

Le troisième coulisseau 17 est muni à son extrémité côté selle d'un logement 27 adapté pour recevoir une portion saillante 31 du quatrième coulisseau 18. Le logement 27 s'étend sensiblement dans la direction du quatrième coulisseau 18 et présente une forme complémentaire à celle de sa portion saillante 31.

L'imbrication des coulisseaux les uns dans les autres empêche tout mouvement des coulisseaux pendant l'opération de moulage.

Ceci afin de faire face aux asymétries d'écoulement du matériau polymère entrainant une asymétrie des efforts sur le coulisseau. Par ailleurs, la rigidité obtenue grâce à l'imbrication des coulisseaux permet d'adapter l'écoulement en modifiant la séquence d'injection de telle sorte à placer les lignes de recollement de la manière la plus avantageuse pour la tenue mécanique du cadre.

Cela conduit à une forme et une épaisseur homogènes, fiables et répétables de matériau polymère pour toutes les parties du cadre. L'éjection des coulisseaux est bien sûr également évitée.

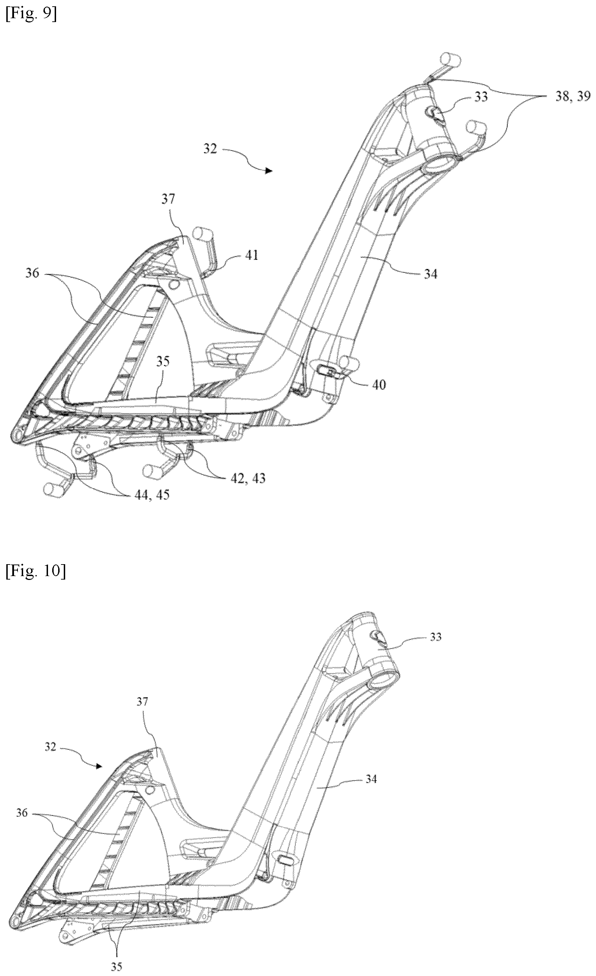

Le moule comprend en outre une pluralité de points d'injection permettant l'injection du matériau polymère. Le positionnement des points d'injection est illustré sur la figure 9, sur la base d'une projection du cadre à obtenir pour faciliter la représentation.

Sur cette figure sont représentés huit points d'injection :
- deux points d'injection 38, 39 situés sur le pivot de fourche 33, de préférence aux deux extrémités du pivot de fourche 33
- un point d'injection 40 situé sur le tube diagonal 34,
- un point d'injection 41 situé sur la tige de selle 37,
- deux points d'injection 42, 43 situés sur une portion avant de chaque base 35, c'est-à-dire proche du pédalier,
- deux points d'injection 44, 45 situés sur une portion arrière de chaque base 35 c'est-à-dire au niveau de la jointure des bases 35 et des haubans 36.

L'homogénéité du matériau polymère injecté, le sens des fibres lorsque ledit matériau polymère est un matériau composite, et la densification du matériau polymère en fin d'injection sont trois paramètres dont l'optimisation permet d'améliorer encore davantage la tenue mécanique du cadre. La disposition des points d'injection ci-dessus conduit à ces avantages, et a été déterminée lors de la phase de mise au point du moule, via des simulations de rhéologies et mises au point suite à des essais d'injections.

Le nombre de points d'injection et leur section respective est ainsi le résultat d'une mise au point précise. Ce nombre est d'au moins trois jusqu'à un point par élément du cadre c'est-à-dire environ neuf points d'injection.

Un procédé de fabrication d'un cadre de vélo par injection d'un matériau polymère dans un moule va maintenant être décrit.

Ce procédé met en œuvre le moule tel que décrit précédemment, et conduit ainsi aux mêmes avantages d'homogénéité, fiabilité et répétabilité des épaisseurs et des formes des parties du cadre.

On commence par fournir un matériau polymère destiné à être injecté dans le moule 1. Ce matériau polymère est de préférence un matériau composite qui comprend une matrice polymère et un renfort fibreux. De manière connue en soit, le renfort est l'armature qui reprend l'essentiel des efforts mécaniques, et la matrice permet de transmettre les efforts mécaniques au renfort.

Le renfort fibreux présente une teneur comprise entre 30% et 60% en poids par rapport au poids total du matériau composite.

De préférence, les fibres du renfort fibreux présentent une longueur inférieure ou égale à 20 millimètres (mm).

Le matériau composite est de préférence de nature végétale ou recyclée.

Le polymère constitutif de la matrice polymère est préférentiellement choisi parmi : polyacrylamide 6 (PA6), polyacrylamide 12 (PA12), polyacrylamide 6/66 (PA6/66), polyacrylamide 610 (P610), polyacrylamide 66 (PA66), polyacrylamide 66/6 (PA6/66), polyaryléthercétone (PAEK), de préférence les polyétheréthercétones (PEEK) et polyéthercétonecétones (PEKK), polytéréphtalate de butylène (PBT), polyéthylèneimine (PEI), polytéréphtalate d'éthylène (PET), polytéréphtalate d'éthylène glycolisé (PETG), polycarbonate (PC), polyméthylpentène (PMP), polyoxyméthylène (POM), polyphényléther (PPE), polytétrafluoroéthylène (PTFE), polyfluorure de vinylidène (PVDF).

Les fibres constitutives du renfort sont préférentiellement choisies parmi : carbone, lin, chanvre, jute, basalte, acrylique aramide, fibre de verre, fer, coco, aluminium, titane, tungstène, cuivre, magnésium, sisal.

Les parties fixe 2 et mobile 3 du moule 1 ainsi que les coulisseaux 15, 16, 17, 18 sont placés en position ouverte, telle que représentée sur la figure 1.

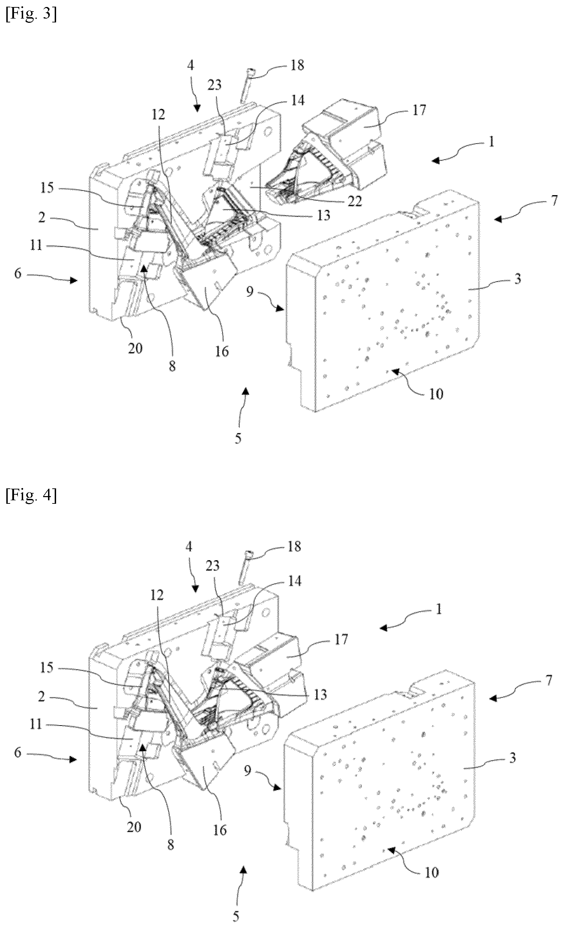

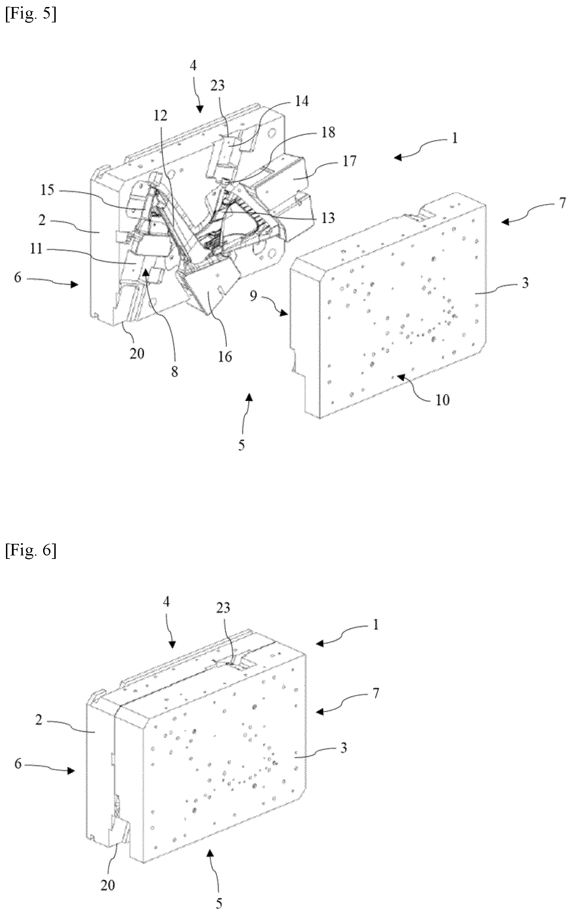

Les coulisseaux 15, 16, 17, 18 sont ensuite insérés dans leur empreinte respective. D'après la structure des coulisseaux du moule des figures 1 à 6, et notamment le positionnement de leurs logements, on ferme d'abord le premier coulisseau 15 (figure 2), puis le deuxième coulisseau 16 (figure 3), le troisième coulisseau 17 (figure 4), et enfin le quatrième coulisseau 18 (figure 5), en s'assurant bien que leur portion saillante se loge correctement dans le logement correspondant du coulisseau voisin.

On ferme ensuite le moule 1 en rapprochant la partie mobile 3 de la partie fixe 2 jusqu'à ce que celles-ci soient au contact l'une de l'autre. Le moule 1 ainsi fermé est illustré sur la figure 6.

On injecte alors à chaud le matériau polymère dans l'empreinte de moulage du moule. Le matériau polymère circule dans l'ensemble de l'empreinte de moulage, venant surmouler les coulisseaux, formant ainsi le cadre 32. Cette opération est également appelée remplissage.

Le matériau polymère est de préférence injecté à une température comprise entre 200°C et 300°C, plus préférentiellement entre 240°C et 280°C.

Le temps d'injection est de préférence compris entre 5 secondes et 10 secondes.

La vitesse d'injection est de préférence constante au cours de l'injection.

Le moule est de préférence préchauffé avant l'injection du matériau polymère, à une température comprise entre 50°C et 100°C, plus préférentiellement entre 70°C et 90°C.

L'injection du matériau polymère est réalisée via les points d'injection. De préférence, les points d'injection sont utilisés les uns après les autres dans un ordre défini, de sorte que l'injection est dite séquentielle.

En référence à la figure 9 décrite précédemment en relation avec le moule, on commence l'injection à t = 0 par les deux points d'injection 38, 39 situés aux deux extrémités du pivot de fourche 33.

Après quelques secondes, par exemple environ 3 secondes, on commence l'injection par le point d'injection situé sur le tube diagonal 34, tout en continuant l'injection par les deux points d'injection 38, 39 du pivot de fourche 33.

On démarre ensuite quelques secondes plus tard, par exemple 2 secondes plus tard (soit un temps d'injection général d'environ 5 secondes), l'injection par les deux points d'injection 42, 43 situés sur les bases 35, tout en continuant l'injection par les deux points d'injection 38, 39 du pivot de fourche 33 et par le point d'injection situé sur le tube diagonal 34.

On commence ensuite l'injection par le point d'injection situé sur la tige de selle 37, typiquement après environ 1 seconde (soit un temps d'injection général d'environ 6 secondes), tout en continuant l'injection par les deux points d'injection 38, 39 du pivot de fourche 33, par le point d'injection situé sur le tube diagonal 34, et par les deux points d'injection 42, 43 situés sur les bases 35.

Enfin, on commence l'injection par les deux points d'injection 44, 45 situés à la jointure des bases 35 et des haubans 36, typiquement après environ une demi-seconde seconde (soit un temps d'injection général d'environ 6,5 secondes), tout en continuant l'injection par les deux points d'injection 38, 39 du pivot de fourche 33, par le point d'injection situé sur le tube diagonal 34, par les deux points d'injection 42, 43 situés sur les bases 35, et par le point d'injection situé sur la tige de selle 37.

En phase de remplissage dynamique, la pression dans l'empreinte de moulage, de 0 à 500 bars, est ajustée par la presse d'injection avec l' objectif de respecter une consigne de vitesse d'injection sensiblement constante (débit de matériau polymère constant). Ceci permet d'obtenir une bonne cristallisation, qui est en lien direct avec les propriétés mécaniques du cadre obtenu.

La pression dans la vis monte progressivement, entre le début de l'injection et la fin de la phase dite dynamique. En phase de remplissage (dynamique), la pression dans la vis peut monter jusqu'à 1000 bars. Les pertes de pression sont dues aux pertes de charge dans le barreau chaud puis aux pertes de charges de remplissage de la pièce, si bien que la pression dans l'empreinte de moulage monte progressivement de 1 bars à 500 bars selon l'endroit de l'empreinte où on se trouve.

Après le remplissage, on réalise une étape de compactage consistant à injecter un faible volume de matériau polymère pour compenser les retassures, déformées, retraits et autres pertes locales de volume du cadre. Cette étape permet d'optimiser la qualité du cadre.

Lors de la phase de compactage, la pression dans l'empreinte de moulage est de l'ordre de 500 bars, et s'applique partout dans ladite empreinte puisqu'il n'y a pas de perte de charges.

En effet, on se trouve en phase statique, de sorte que le matériau polymère est sensiblement immobile, et ne frotte donc plus contre les parois de l'empreinte.

L'injection au niveau de chaque point d'injection est poursuivie pendant 20 secondes à 40 secondes, de préférence pendant 30 secondes à 35 secondes. Il y a donc une superposition des phases d'injection au niveau des différents points d'injection, chaque phase d'injection étant décalée dans le temps par rapport à la précédente, typiquement de quelques dixièmes de secondes à quelques secondes.

Le matériau est ensuite refroidi, puis après refroidissement, le moule 1 est ouvert par déplacement de la partie mobile 3 en l'éloignant de la partie fixe 2, et les coulisseaux 15, 16, 17, 18 sont également ouverts afin de libérer le cadre 32.

Enfin, le cadre 32 est éjecté du moule, de manière manuelle ou automatique, tel qu'illustré sur la figure 7.

De manière optionnelle, le procédé comprend en outre une étape de nervurage extérieur des bases 35 du cadre 32, et/ou une étape de nervurage intérieur des haubans 36 du cadre 32.

L'étape de nervurage s'explique par le fait que la partie arrière du cadre, incluant les bases 35 et les haubans 36, est obtenue par un usinage de rainures dans le moule coaxiales au mouvement des tiroirs, ce qui contraint de ne pas avoir de contre dépouille dans l'axe dudit mouvement. La présence de nervures extérieures sur les bases et les haubans permet ainsi de les rigidifier.

La figure 10 illustre en détails le cadre obtenu. Le cadre 32 comprend un pivot de fourche 33 destiné à recevoir la fourche d'un vélo recevant la roue avant, un tube diagonal 34, des bases 35 et des haubans 36 formant la partie arrière du cadre, destinée à recevoir un axe portant la roue arrière, et une tige de selle 37 destinée à recevoir une selle.

## Revendications

1. Moule (1) pour la fabrication d'un cadre (32) monobloc de bicyclette, de tricycle, de quadricycle, ou de motocycle par injection d'un matériau polymère, le moule (1) comprenant une partie fixe (2) et une partie mobile (3) apte à se rapprocher ou à s'éloigner de la partie fixe pour fermer ou ouvrir le moule respectivement, qui délimitent ensemble une empreinte de moulage (8) du cadre lorsque le moule est fermé, le moule (1) comprenant :
- au moins trois coulisseaux (15, 16, 17, 18), aptes à être insérés dans des empreintes (11, 12, 13, 14) respectives de l'empreinte de moulage (8) dont le positionnement au sein de ladite empreinte de moulage et le profil correspondent à des parties du cadre à fabriquer, lesdits coulisseaux (15, 16, 17, 18) étant destinés à être surmoulés de matériau polymère pendant une opération de moulage de sorte à former lesdites parties du cadre (32),
- au moins deux de ces coulisseaux (15, 16, 17, 18) sont en engagement l'un avec l'autre lorsqu'ils sont en position dans leur empreinte respective, formant ainsi une structure solide capable de résister aux efforts d'injection, **caractérisé en ce que** :
ledit moule (1) comprend au moins trois des empreintes et coulisseaux correspondants suivants :
- une première empreinte (11) présentant un profil de pivot de fourche (33) du cadre, et un premier coulisseau (15) adapté pour être inséré dans la première empreinte (11),
- une deuxième empreinte (12) qui communique avec la première empreinte (11), présentant un profil de tube diagonal (34) du cadre, et un deuxième coulisseau (16) adapté pour être inséré dans la deuxième empreinte (12),
- une troisième empreinte (13) qui communique avec la deuxième empreinte (12), présentant un profil de bases (35) et de haubans (36), et un troisième coulisseau (17) adapté pour être inséré dans la troisième empreinte (13),
- une quatrième empreinte (14) qui communique avec la troisième empreinte (13), présentant un profil de tige de selle (37), et un quatrième coulisseau (18) adapté pour être inséré dans la quatrième empreinte (14).

2. Moule (1) selon la revendication 1, dans lequel au moins deux des coulisseaux (15, 16, 17, 18) sont munis d'au moins un logement (24, 25, 26, 27) adapté pour recevoir une portion saillante (28, 29, 30, 31) de forme complémentaire d'un coulisseau voisin, de sorte que lorsque les coulisseaux (15, 16, 17, 18) sont en position dans leur empreinte respective, lesdits coulisseaux sont emboités les uns dans les autres.

3. Moule (1) selon la revendication 1 ou 2, dans lequel au moins deux des coulisseaux suivants sont munis d'au moins un logement tel que :
- le premier coulisseau (15) est muni d'au moins un logement (24) adapté pour recevoir une portion saillante (28) du deuxième coulisseau (16),
- le deuxième coulisseau (16) est muni d'au moins un logement (25, 26) adapté pour recevoir une portion saillante (29, 30) du troisième coulisseau (17),
- le troisième coulisseau (17) est muni d'au moins un logement (27) adapté pour recevoir une portion saillante (31) du quatrième coulisseau (18).

4. Moule (1) selon l'une des revendications 1 à 3, dans lequel, en considérant que l'empreinte de moulage (8) est positionnée dans un sens conventionnel d'utilisation d'une bicyclette, d'un tricycle, d'un quadricycle, ou d'un motocycle :
- le premier coulisseau (15) est inséré par le dessous (5) du moule, dans une direction du pivot de fourche (33),
- le deuxième coulisseau (16) est inséré par le dessous (5) du moule, dans une direction du tube diagonal (34), et vient s'emboîter dans le premier coulisseau (15),
- le troisième coulisseau (17) est inséré par l'arrière (7) du moule, et vient s'emboîter dans le deuxième coulisseau (16),
- le quatrième coulisseau (18) est inséré par le dessus (4) du moule, dans une direction de la tige de selle (37), et vient s'emboîter dans le troisième coulisseau (17).

5. Moule (1) selon l'une quelconque des revendications précédentes, comprenant au moins un des points d'injection suivants :
- au moins un point d'injection (38, 39) situé sur le pivot de fourche (33), de préférence au moins deux points d'injection situés préférentiellement aux deux extrémités du pivot de fourche (33),
- au moins un point d'injection (40) situé sur le tube diagonal (34),
- au moins un point d'injection (41) situé sur la tige de selle (37),
- au moins deux points d'injection (42, 43) situés sur une portion avant de chaque base (35),
- au moins deux points d'injection (44, 45) situés sur une portion arrière de chaque base (35).

6. Procédé de fabrication d'un cadre (32) monobloc de bicyclette, de tricycle, de quadricycle, ou de motocycle par injection d'un matériau polymère dans un moule (1) selon l'une des revendications 1 à 5, **caractérisé en ce qu'**il comprend les étapes suivantes :
- fourniture d'un moule (1) selon l'une quelconque des revendications 1 à 5,
- fermeture des coulisseaux (15, 16, 17, 18) afin de les mettre en engagement les uns avec les autres, de préférence de les emboîter les uns dans les autres, et fermeture du moule (1) par déplacement de la partie mobile (3) vers la partie fixe (2) jusqu'au contact de celles-ci de sorte à délimiter l'empreinte de moulage (8),
- injection à chaud d'un matériau polymère dans l'empreinte de moulage (8), en surmoulant les coulisseaux (15, 16, 17, 18) en position dans leur empreinte (11, 12, 13, 14) respective, pour former le cadre (32),
- ouverture des coulisseaux (15, 16, 17, 18), et ouverture du moule (1) par séparation des parties fixe (2) et mobile (3) pour libérer le cadre (32),
- éjection du cadre.

7. Procédé selon la revendication 6, comprenant en outre une étape de nervurage extérieur des bases (35) du cadre (32).

8. Procédé selon la revendication 6 ou la revendication 7, comprenant en outre une étape de nervurage intérieur des haubans (36) du cadre (32).

9. Procédé selon l'une quelconque des revendications 6 à 8, dans lequel le matériau polymère est injecté dans l'empreinte de moulage par des points d'injection, l'injection étant réalisée depuis l'avant (6) du cadre (32), c'est-à-dire un point d'injection débouchant sur une empreinte (11) du pivot de fourche (33) ou une empreinte (12) du tube diagonal (34), vers l'arrière (7) du cadre (32), c'est-à-dire un point d'injection débouchant sur une empreinte (13) des bases (35) et des haubans (36) ou une empreinte (14) de la tige de selle (37).

10. Procédé selon l'une quelconque des revendications 6 à 9, dans lequel le matériau polymère est un matériau composite comprenant une matrice polymère et un renfort fibreux, ledit renfort fibreux ayant une teneur comprise entre 30% et 60% en poids par rapport au poids total du matériau composite.

11. Procédé selon la revendication 10, dans lequel le polymère constitutif de la matrice polymère est choisi parmi : polyacrylamide 6, polyacrylamide 12, polyacrylamide 6/66, polyacrylamide 610, polyacrylamide 66, polyacrylamide 66/6, polyaryléthercétone, de préférence les polyétheréthercétones et polyéthercétonecétones, polytéréphtalate de butylène, polyéthylèneimine, polytéréphtalate d'éthylène, polytéréphtalate d'éthylène glycolisé, polycarbonate, polyméthylpentène, polyoxyméthylène, polyphényléther, polytétrafluoroéthylène, polyfluorure de vinylidène.

12. Procédé selon la revendication 10 ou la revendication 11, dans lequel les fibres constitutives du renfort sont choisies parmi : carbone, lin, chanvre, jute, basalte, acrylique aramide, fibre de verre, fer, coco, aluminium, titane, tungstène, cuivre, magnésium, sisal.

## Patentansprüche

1. Form (1) zur Herstellung eines einstückigen Rahmens (32) für Zweiräder, Dreiräder, Vierräder oder Motorräder durch Einspritzen eines Polymermaterials, wobei die Form (1) einen feststehenden Abschnitt (2) und einen beweglichen Abschnitt (3) umfasst, welcher dazu befähigt ist, sich dem feststehenden Abschnitt anzunähern oder sich davon zu entfernen, um die Form zu schließen beziehungsweise zu öffnen, wobei diese einen Formhohlraum (8) für den Rahmen begrenzen, wenn die Form geschlossen ist, wobei die Form (1) folgendes umfasst:
- mindestens drei Gleitstücke (15, 16, 17, 18), die dafür geeignet sind, in jeweilige Formeinsätze (11, 12, 13, 14) des Formhohlraums (8) eingefügt zu werden, wobei ihre Anordnung innerhalb der Formhohlraums und ihr Profil Abschnitten des herzustellenden Rahmens entsprechen, wobei die Gleitstücke (15, 16, 17, 18) dazu bestimmt sind, während eines Formungsvorgangs derart von Polymermaterial überformt zu werden, dass sie diese Abschnitte des Rahmens (32) bilden,
- wobei mindestens zwei der Gleitstücke (15, 16, 17, 18) miteinander in Eingriff stehen, wenn sie in ihrem jeweiligen Formeinsatz angeordnet sind, sodass sie eine solide Struktur bilden, die dazu befähigt ist, den Einspritzkräften zu widerstehen, **dadurch gekennzeichnet, dass**:
die Form (1) mindestens drei der folgenden Formeinsätze und entsprechende Gleitstücke umfasst:
- einen ersten Formeinsatz (11), der ein Profil des Gabelschafts (33) des Rahmens aufweist, und ein erstes Gleitstück (15), das dafür geeignet ist, in den ersten Formeinsatz (11) eingefügt zu werden,
- einen zweiten Formeinsatz (12), der mit dem ersten Formeinsatz (11) in Verbindung steht und ein Profil des Unterrohrs (34) des Rahmens aufweist, und ein zweites Gleitstück (16), das dafür geeignet ist, in den zweiten Formeinsatz (12) eingefügt zu werden,
- einen dritten Formeinsatz (13), der mit dem zweiten Formeinsatz (12) in Verbindung steht und ein Profil der Kettenstreben (35) und Sitzstreben (36) des Rahmens aufweist, und ein drittes Gleitstück (17), das dafür geeignet ist, in den dritten Formeinsatz (13) eingefügt zu werden,
- einen vierten Formeinsatz (14), der mit dem dritten Formeinsatz (13) in Verbindung steht und ein Profil des Sitzrohrs (37) des Rahmens aufweist, und ein viertes Gleitstück (18), das dafür geeignet ist, in den vierten Formeinsatz (14) eingefügt zu werden.

2. Form (1) nach Anspruch 1, wobei mindestens zwei der Gleitstücke (15, 16, 17, 18) mit mindestens einer Aufnahme (24, 25, 26, 27) versehen sind, die dafür geeignet ist, einen hervorstehenden Bereich (28, 29, 30, 31) mit einer komplementären Gestalt eines benachbarten Gleitstücks derart aufzunehmen, dass die Gleitstücke (15, 16, 17, 18), wenn sie in ihrem jeweiligen Formeinsatz angeordnet sind, ineinander gesteckt sind.

3. Form (1) nach Anspruch 1 oder 2, wobei mindestens zwei der folgenden Gleitstücke mit mindestens einer Aufnahme versehen sind, wie etwa:
- das erste Gleitstück (15) ist mit mindestens einer Aufnahme (24) versehen, die dafür geeignet ist, einen hervorstehenden Bereich (28) des zweiten Gleitstücks (16) aufzunehmen,
- das zweite Gleitstück (16) ist mit mindestens einer Aufnahme (25, 26) versehen, die dafür geeignet ist, einen hervorstehenden Bereich (29, 30) des dritten Gleitstücks (17) aufzunehmen,
- das dritte Gleitstück (17) ist mit mindestens einer Aufnahme (27) versehen, die dafür geeignet ist, einen hervorstehenden Bereich (31) des vierten Gleitstücks (18) aufzunehmen,

4. Form (1) nach einem der Ansprüche 1 bis 3, wobei unter der Annahme, dass der Formhohlraum (8) gemäß der herkömmlichen Ausrichtung zur Verwendung in einem Zweirad, einem Dreirad, einem Vierrad oder einem Motorrad angeordnet ist:
- das erste Gleitstück (15) von unten (5) in die Form eingeführt wird, in einer Richtung des Gabelschafts (33),
- das zweite Gleitstück (16) von unten (5) in die Form eingeführt wird, in einer Richtung des Unterrohrs (34), und in das erste Gleitstück (15) eingesteckt wird,
- das dritte Gleitstück (17) von hinten (7) in die Form eingeführt wird und in das zweite Gleitstück (16) eingesteckt wird,
- das vierte Gleitstück (18) von oben (4) in die Form eingeführt wird, in einer Richtung des Sitzrohrs (37), und in das dritte Gleitstück (17) eingesteckt wird.

5. Form (1) nach einem beliebigen der vorhergehenden Ansprüche, wobei sie mindestens einen der folgenden Einspritzpunkte umfasst:
- mindestens einen Einspritzpunkt (38, 39), der sich an dem Gabelschaft (33) befindet, vorzugsweise mindestens zwei Einspritzpunkte, die sich bevorzugt an den beiden Enden der Gabelschafts (33) befinden,
- mindestens einen Einspritzpunkt (40), der sich an dem Unterrohr (34) befindet,
- mindestens einen Einspritzpunkt (41), der sich an dem Sitzrohr (37) befindet,
- mindestens zwei Einspritzpunkte (42, 43), die sich an einem vorderen Bereich jeder der Kettenstreben (35) befinden,
- mindestens zwei Einspritzpunkte (44, 45), die sich an einem hinteren Bereich jeder der Kettenstreben (35) befinden.

6. Verfahren zur Herstellung eines einstückigen Rahmens (32) für Zweiräder, Dreiräder, Vierräder oder Motorräder durch Einspritzen eines Polymermaterials in eine Form (1) nach einem der Ansprüche 1 bis 5, **dadurch gekennzeichnet, dass** es die folgenden Schritte umfasst:
- Bereitstellen einer Form (1) nach einem beliebigen der Ansprüche 1 bis 5,
- Schließen der Gleitstücke (15, 16, 17, 18), um sie miteinander in Eingriff zu bringen, wobei sie vorzugsweise ineinander gesteckt werden, und Schließen der Form (1), indem der bewegliche Abschnitt (3) zum feststehenden Abschnitt (2) hinbewegt wird, bis diese sich derart berühren, dass sie den Formhohlraum (8) begrenzen,
- Einspritzen eines Polymermaterials in heißem Zustand in den Formhohlraum (8), wobei die Gleitstücke (15, 16, 17, 18) welche in ihren jeweiligen Formeinsätzen (11, 12, 13, 14) angeordnet sind, überformt werden, um den Rahmen (32) zu bilden,
- Öffnen der Gleitstücke (15, 16, 17, 18) und Öffnen der Form (1), indem der feststehende (2) und der bewegliche (3) Abschnitt getrennt werden, um den Rahmen (32) freizugeben,
- Ausstoßen des Rahmens.

7. Verfahren nach Anspruch 6, wobei es darüber hinaus einen Schritt umfasst, in welchem die Kettenstreben (35) des Rahmens (32) mit außenliegenden Rippen versehen werden.

8. Verfahren nach Anspruch 6 oder Anspruch 7, wobei es darüber hinaus einen Schritt umfasst, in welchem die Sitzstreben (36) des Rahmens (32) mit innenliegenden Rippen versehen werden.

9. Verfahren nach einem beliebigen der Ansprüche 6 bis 8, wobei das Polymermaterial über Einspritzpunkte in den Formhohlraum eingespritzt wird, wobei das Einspritzen ausgehend von der Vorderseite (6) des Rahmens (32), das heißt, von einem Einspritzpunkt, welcher sich zu einem Formeinsatz (11) des Gabelschaftes (33) oder zu einem Formeinsatz (12) des Unterrohrs (34) hin öffnet, zur Rückseite (7) des Rahmens (32) hin erfolgt, das heißt, zu einem Einspritzpunkt, welcher sich zu einem Formeinsatz (13) der Kettenstreben (35) und der Sitzstreben (36) oder einem Formeinsatz (14) des Sitzrohrs (37) hin öffnet.

10. Verfahren nach einem beliebigen der Ansprüche 6 bis 9, wobei es sich bei dem Polymermaterial um ein Verbundmaterial handelt, das eine Polymermatrix und eine faserartige Verstärkung umfasst, wobei der Gehalt an der faserartigen Verstärkung im Bereich von 30% bis 60% nach Gewicht liegt, bezogen auf das Gesamtgewicht des Verbundmaterials.

11. Verfahren nach Anspruch 10, wobei das Polymer, aus welchem die Polymermatrix besteht, aus den folgenden ausgewählt ist: Polyacrylamid 6, Polyacrylamid 12, Polyacrylamid 6/66, Polyacrylamid 610, Polyacrylamid 66, Polyacrylamid 66/6, Polyaryletherketon, vorzugsweise Polyetheretherketone und Polyetherketonketone, Polybutylenterephtalat, Polyethylenimin, Polyethylenterephtalat, glykolisiertes Polyethylenterephtalat, Polycarbonat, Polymethylpenten, Polyoxymethylen, Polyphenylether, Polytetrafluorethylen, Polyvinylidenfluorid.

12. Verfahren nach Anspruch 10 oder Anspruch 11, wobei die Fasern, aus welchen die Verstärkung besteht, aus den folgenden ausgewählt sind: Kohlenstoff, Leinen, Hanf, Jute, Basalt, Acryl-Aramid, Glasfaser, Eisen, Kokos, Aluminium, Titan, Wolfram, Kupfer, Magnesium, Sisal.

## Claims

1. Mould (1) for manufacturing a one-piece frame (32) for a bicycle, tricycle, quadricycle, or motorcycle by injecting a polymer material, the mould (1) comprising a fixed part (2) and a movable part (3) able to move towards or away from the fixed part to close or open the mould, respectively, which together delimit a moulding impression (8) of the frame when the mould is closed, the mould (1) comprising:
- at least three slides (15, 16, 17, 18), capable of being inserted into respective impressions (11, 12, 13, 14) of the moulding impression (8), the positioning of which within said moulding impression and the profile of which correspond to parts of the frame to be manufactured, said slides (15, 16, 17, 18) being intended to be overmoulded with polymer material during a moulding operation so as to form said parts of the frame (32),
- at least two of these slides (15, 16, 17, 18) are in engagement with each other when they are in position in their respective impression, thus forming a solid structure capable of withstanding injection forces, **characterised in that**: said mould (1) comprises at least three of the following corresponding impressions and slides:
- a first impression (11) having a fork pivot profile (33) of the frame, and a first slide (15) adapted to be inserted into the first impression (11),
- a second impression (12) which communicates with the first impression (11), having a diagonal tube profile (34) of the frame, and a second slide (16) adapted to be inserted into the second impression (12),
- a third impression (13) which communicates with the second impression (12), having a profile of bases (35) and stays (36), and a third slide (17) adapted to be inserted in the third impression (13),
- a fourth impression (14) which communicates with the third impression (13), having a seat post profile (37), and a fourth slide (18) adapted to be inserted into the fourth impression (14).

2. Mould (1) according to claim 1, wherein at least two of the slides (15, 16, 17, 18) are provided with at least one housing (24, 25, 26, 27) adapted to receive a protruding portion (28, 29, 30, 31) with a shape complementary to an adjacent slide, such that when the slides (15, 16, 17, 18) are in position in their respective imprint, said slides are fitted in each other.

3. Mould (1) according to claim 1 or 2, wherein at least two of the following slides are provided with at least one housing such as:
- the first slide (15) is provided with at least one housing (24) adapted to receive a protruding portion (28) of the second slide (16),
- the second slide (16) is provided with at least one housing (25, 26) adapted to receive a protruding portion (29, 30) of the third slide (17),
- the third slide (17) is provided with at least one housing (27) adapted to receive a protruding portion (31) of the fourth slide (18).

4. Mould (1) according to any one of claims 1 to 3, wherein, considering that the moulding impression (8) is positioned in a conventional direction of use of a bicycle, tricycle, quadricycle, or motorcycle:
- the first slide (15) is inserted from the bottom (5) of the mould, in a direction of the fork pivot (33),
- the second slide (16) is inserted from the bottom (5) of the mould, in a direction of the diagonal tube (34), and fits into the first slide (15),
- the third slide (17) is inserted from the rear (7) of the mould, and fits into the second slide (16),
- the fourth slide (18) is inserted from the top (4) of the mould, in a direction of the seat post (37), and fits into the third slide (17).

5. Mould (1) according to any one of the preceding claims, comprising at least one of the following injection points:
- at least one injection point (38, 39) located on the fork pivot (33), preferably at least two injection points located preferably at both ends of the fork pivot (33),
- at least one injection point (40) located on the diagonal tube (34),
- at least one injection point (41) located on the seat post (37),
- at least two injection points (42, 43) located on a front portion of each base (35),
- at least two injection points (44, 45) located on a rear portion of each base (35).

6. Method for manufacturing a one-piece frame (32) for a bicycle, tricycle, quadricycle, or motorcycle by injecting a polymer material into a mould (1) according to any one of claims 1 to 5, **characterised in that** it comprises the following steps:
- providing a mould (1) according to any one of claims 1 to 5,
- closing the slides (15, 16, 17, 18) in order to engage them with each other, preferably to fit them into each other, and closing the mould (1) by moving the movable part (3) towards the fixed part (2) until they come into contact so as to delimit the moulding impression (8),
- hot injecting a polymer material into the moulding impression (8), by overmoulding the slides (15, 16, 17, 18) in position in their respective impression (11, 12, 13, 14), to form the frame (32),
- opening the slides (15, 16, 17, 18), and opening the mould (1) by separating the fixed (2) and movable (3) parts to release the frame (32),
- ejecting the frame.

7. Method according to claim 6, further comprising a step of externally ribbing the bases (35) of the frame (32).

8. Method according to claim 6 or claim 7, further comprising a step of internally ribbing the stays (36) of the frame (32).

9. Method according to any one of claims 6 to 8, wherein the polymer material is injected into the mould impression via injection points, the injection being carried out from the front (6) of the frame (32), that is to say an injection point opening out onto an impression (11) of the fork pivot (33) or an impression (12) of the diagonal tube (34), towards the rear (7) of the frame (32), that is to say an injection point opening out onto an impression (13) of the bases (35) and the stays (36) or an impression (14) of the seat post (37).

10. Method according to any one of claims 6 to 9, wherein the polymer material is a composite material comprising a polymer matrix and a fibrous reinforcement, said fibrous reinforcement having a content of between 30% and 60% by weight relative to the total weight of the composite material.

11. Method according to claim 10, wherein the polymer constituting the polymer matrix is chosen from: polyacrylamide 6, polyacrylamide 12, polyacrylamide 6/66, polyacrylamide 610, polyacrylamide 66, polyacrylamide 66/6, polyaryletherketone, preferably polyetheretherketones and polyetherketoneketones, polybutylene terephthalate, polyethyleneimine, polyethylene terephthalate, glycolized polyethylene terephthalate, polycarbonate, polymethylpentene, polyoxymethylene, polyphenylether, polytetrafluoroethylene, polyvinylidene fluoride.

12. Method according to claim 10 or claim 11, wherein the fibres constituting the reinforcement are chosen from: carbon, flax, hemp, jute, basalt, aramid acrylic, glass fiber, iron, coco, aluminum, titanium, tungsten, copper, magnesium, sisal.
